# EUROPEAN PATENT APPLICATION

(11) **EP 4 557 335 A2**
(43) Date of publication of application: **21.05.2025**
(21) Application number: 24206129.9
(22) Date of filing: 11.10.2024
(51) Int. Cl.: H01G 4/232, H01G 4/12, H01G 4/30

(54) **MULTILAYER ELECTRONIC COMPONENT**

(30) Priority: 16.11.2023 KR 20230158725
(71) Applicant: Samsung Electro-Mechanics Co., Ltd., Suwon-si, Gyeonggi-do (KR)
(72) Inventor: Kang, Woo Seok, Suwon-si, Gyeonggi-do (KR); Lee, Dae Hee, Suwon-si, Gyeonggi-do (KR); Lee, Jang Yeol, Suwon-si, Gyeonggi-do (KR); Kim, Jong Ryeong, Suwon-si, Gyeonggi-do (KR)
(74) Representative: Grünecker Patent- und Rechtsanwälte PartG mbB

(57) **Abstract**

A multilayer electronic component according to an example embodiment of the present disclosure may include: a body including a dielectric layer and an internal electrode; and an external electrode disposed on the body, and the external electrode may include a conductive metal, a ceramic material and glass, and the glass may include silicon (Si), boron (B), sodium (Na), and aluminum (Al).

## Description

### CROSS-REFERENCE TO RELATED APPLICATION(S)

This application claims the benefit of priority to Korean Patent Application No. 10-2023-0158725 filed on November 16, 2023, in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, is a chip-type condenser, mounted on the printed circuit boards of various types of electronic product, such as image display devices including a liquid crystal display (LCD) and a plasma display panel (PDP), computers, smartphones and mobile phones, and serves to charge or discharge electricity therein or therefrom.

The multilayer ceramic capacitor may be used as a component in various electronic devices due to having a small size, ensuring high capacitance and being easily mounted. With the miniaturization and implementation of high output power of various electronic devices such as computers and mobile devices, demand for miniaturization and high capacitance of multilayer ceramic capacitors has also been increasing.

With the miniaturization of the multilayer ceramic capacitor, a thickness of the external electrodes also decreases, which may be generally accompanied by the problem of reduced moisture resistance reliability. Accordingly, moisture resistance reliability may be supplemented by adding glass or ceramic materials to the external electrode, but when a sintering temperature is high, the electrical properties may be weakened as the glass dissolves on the surface of the external electrode, or problems such as deterioration of the characteristics of the multilayer ceramic capacitor by causing re-sintering of a ceramic body may occur, and thus, research is required to solve these problems.

### SUMMARY

An aspect of the present disclosure is to lower a heat treatment temperature of an external electrode.

An aspect of the present disclosure is to prevent a glass dissolution phenomenon from an external electrode.

An aspect of the present disclosure is to improve moisture resistance reliability of a multilayer electronic component by preventing penetration of a plating solution by applying an external electrode having enhanced corrosion resistance to the plating solution.

However, the aspects of the present disclosure are not limited to the above-described contents, and may be more easily understood in the process of describing specific example embodiments of the present disclosure.

A multilayer electronic component according to an example embodiment of the present disclosure may include: a body including a dielectric layer and an internal electrode; and an external electrode disposed on the body, and the external electrode may include a conductive metal, a ceramic material and glass, and the glass may include silicon (Si), boron (B), sodium (Na), and aluminum (Al).

A multilayer electronic component according to another example embodiment of the present disclosure may include a body including a dielectric layer and an internal electrode; and an external electrode disposed on the body, and the external electrode may include a conductive metal, a ceramic material and glass, and the ceramic material may include at least one of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba (Ti_{1-y}Zr_{y}) O₃(0<y<1), K_{0.5}Na_{0.5}NbO₃, Bi_{0.5}Na_{0.5}TiO₃, and Pb(Zr, Ti)O₃.

One of the various effects of the present disclosure is to lower a heat treatment temperature of an external electrode.

One of the various effects of the present disclosure is to suppress a glass dissolution phenomenon of an external electrode.

One of the various effects of the present disclosure is to improve moisture resistance reliability of the multilayer electronic component by providing an external electrode having strong corrosion resistance to a plating solution, and preventing penetration of the plating solution.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 schematically illustrates an exploded perspective view illustrating a multilayer structure of internal electrodes;
FIG. 3 is a schematic cross-sectional view taken along line I-I' of FIG. 1;
FIG. 4 is a schematic cross-sectional view taken along line II-II' of FIG. 1; and
FIG. 5 schematically illustrates an enlarged view of the P area of FIG. 3.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

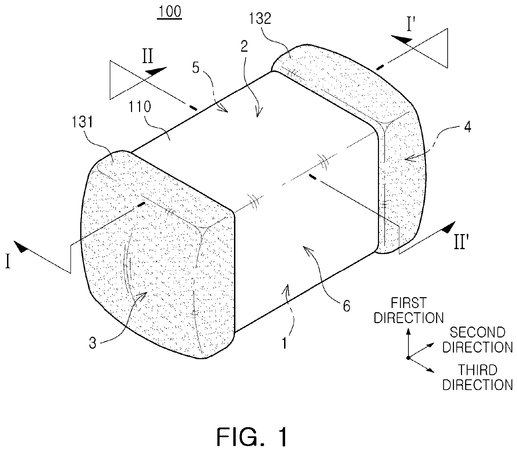

FIG. 1 is a perspective view schematically illustrating a multilayer electronic component according to an example embodiment of the present disclosure.

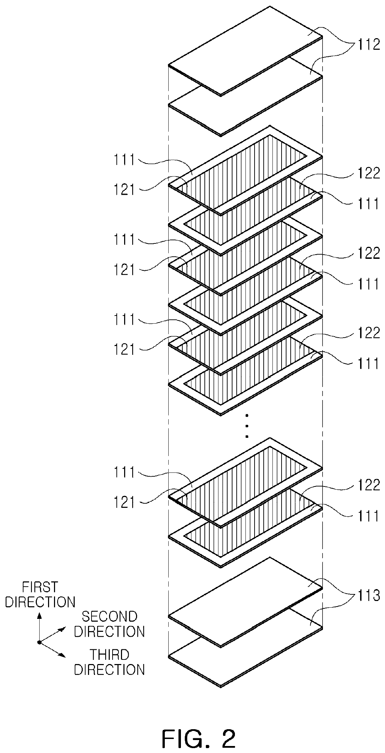

FIG. 2 schematically illustrates an exploded perspective view illustrating a multilayer structure of internal electrodes.

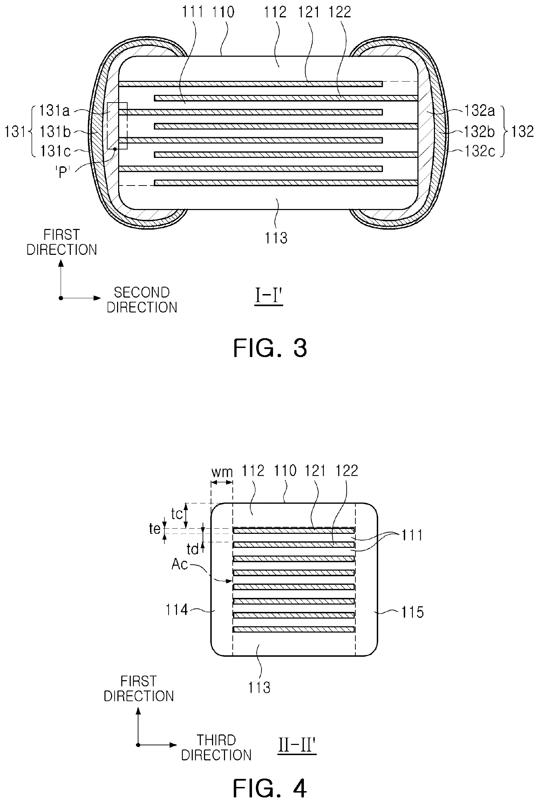

FIG. 3 is a schematic cross-sectional view taken along line I-I' of FIG. 1.
FIG. 4 is a schematic cross-sectional view taken along line II-II' of FIG. 1.

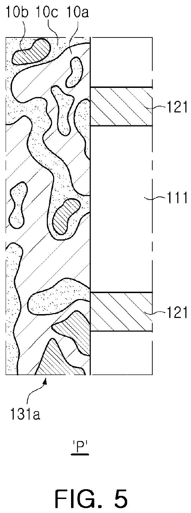

FIG. 5 schematically illustrates an enlarged view of the P area of FIG. 3.

Hereinafter, a multilayer electronic component according to an example embodiment of the present disclosure will be described in detail with reference to FIGS. 1 to 5. However, as an example of a multilayer electronic component, a multilayer ceramic capacitor will be described, but the multilayer electronic component of the present disclosure may also be applied to various electronic products using dielectric compositions, such as inductors, piezoelectric elements, varistors, or thermistors.

A multilayer electronic component 100 according to an example embodiment of the present disclosure may include a body 110 including a dielectric layer 111 and internal electrodes 121 and 122; and external electrodes 131 and 132 disposed on the body 110, and the external electrodes 131 and 132 may include a conductive metal 10a, a ceramic material 10b and glass 10c, and the glass 10c may include silicon (Si), boron (B), sodium (Na), and aluminum (Al).

Additionally, a multilayer electronic component 100 according to another example embodiment of the present disclosure may include a body 110 including a dielectric layer 111 and internal electrodes 121 and 122; and external electrodes 131 and 132 disposed on the body 110, and the external electrodes 131 and 132 may include a conductive metal 10a, a ceramic material 10b and glass 10c, and the ceramic material 10b may include at least one of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), K_{0.5}Na_{0.5}NbO₃, Bi_{0.5}Na_{0.5}TiO₃, and Pb (Zr, Ti)O₃.

The body 110 may include dielectric layers 111 and internal electrodes 121 and 122 alternately stacked.

More specifically, the body 110 may include a capacitance formation portion Ac disposed inside the body 110, and including first internal electrodes 121 and second internal electrodes 122 alternately arranged to face each other with the dielectric layer 111 interposed therebetween to form capacitance.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with entirely straight lines, but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction.

In a state in which a plurality of dielectric layers 111 included in the body 110 are sintered, boundaries between adjacent dielectric layers 111 may be integrated so as to be difficult to identify without using a scanning electron microscope (SEM).

The materials included in the dielectric layer 111 is not limited as long as sufficient electrostatic capacity may be obtained. In general, a perovskite (ABO₃)-based material may be used, and, for example, a barium titanate-based material, a lead composite perovskite-based material, or a strontium titanate-based material may be used. The barium titanate-based material may include BaTiO₃-based ceramic particles, and examples of ceramic particles may include BaTiO₃, and (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), which is formed by partially employing calcium (Ca) and zirconium (Zr) in BaTiO₃.

Additionally, as the materials included in the dielectric layer 111, various ceramic additives, organic solvents, binders, dispersants, and the like, may be added to particles such as barium titanate (BaTiO₃) according to the purpose of the present disclosure.

A thickness td of the dielectric layer 111 is not limited.

In order to ensure reliability in a high voltage environment of the multilayer electronic component 100, the thickness of the dielectric layer 111 may be 10.0 um or less. Additionally, in order to achieve miniaturization and high capacity of the multilayer electronic component 100, the thickness of the dielectric layer 111 may be 3.0 um or less, and in order to more easily achieve miniaturization and high capacitance, the thickness of the dielectric layer 111 may be 1.0 µm or less, preferably 0.6 um or less, and more preferably 0.4 um or less.

Here, the thickness td of the dielectric layer 111 may refer to a thickness td of the dielectric layer 111 disposed between the first and second internal electrodes 121 and 122.

Meanwhile, the thickness td of the dielectric layer 111 may refer to a first directional size of the dielectric layer 111. Additionally, the thickness td of the dielectric layer 111 may refer to an average thickness td of the dielectric layer 111, and may refer to an average size of the dielectric layer 111 in the first direction.

The average size of the dielectric layer 111 in the first direction may be measured by scanning images of first and second directional cross-sections of the body 110 with a scanning electron microscope (SEM) of 10,000× magnification. More specifically, the average size of one dielectric layer 111 in the first direction may be an average value calculated by measuring the first directional size of one dielectric layer 111 at 10 points spaced apart from each other at equal intervals in the second direction in the scanned image. The 10 points spaced apart from each other at equal intervals may be designated in the capacitance formation portion Ac. Additionally, when the average value is measured by extending an average value measurement up to 10 dielectric layers 111, an average thickness of the dielectric layers 111 in the first directional may be further generalized

The internal electrodes 121 and 122 may be alternately stacked with the dielectric layer 111.

The internal electrodes 121 and 122 may include a first internal electrode 121 and a second internal electrode 122, and the first and second internal electrodes 121 and 122 may be alternately arranged to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body 110 and may be connected to the first internal electrode 121, and a second external electrode 132 may be disposed on the fourth surface 4 of the body 110 and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. In this case, the first and second internal electrodes 121 and 122 may be electrically separated from each other by the dielectric layer 111 disposed therebetween.

Meanwhile, the body 110 may be formed by alternately stacking ceramic green sheets on which the first internal electrode 121 is printed and ceramic green sheets on which the second internal electrode 122 are printed, and then sintering the ceramic green sheets.

The material included in the internal electrodes 121 and 122 is not particularly limited, and any material having excellent electrical conductivity may be used. For example, the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof.

Additionally, the internal electrodes 121 and 122 may be formed by printing a conductive paste for internal electrodes including one or more of nickel (Ni), copper (Cu), palladium (Pd), silver (Ag), gold (Au), platinum (Pt), tin (Sn), tungsten (W), titanium (Ti) and alloys thereof on a ceramic green sheet. A printing method for the conductive paste for internal electrodes may be a screen printing method or a gravure printing method, but the present disclosure is not limited thereto.

Meanwhile, a thickness te of the internal electrodes 121 and 122 is not limited.

In order to ensure the reliability of the multilayer electronic component 100 in a high voltage environment, the thickness te of the internal electrodes 121 and 122 may be 3.0 um or less. Additionally, in order to achieve miniaturization and high capacitance of the multilayer electronic component 100, the thickness of the internal electrodes 121 and 122 may be 1.0 um or less, and in order to more easily achieve ultra-miniaturization and high capacitance, the thickness of the internal electrodes 121 and 122 may be 0.6 um or less, and more preferably 0.4 um or less.

Here, the thickness te of the internal electrodes 121 and 122 may refer to a first directional size of the internal electrodes 121 and 122. Additionally, the thickness te of the internal electrodes 121 and 122 may refer to an average thickness te of the internal electrodes 121 and 122, and may refer to an average size of the internal electrodes 121 and 122 in the first direction.

The average size of the internal electrodes 121 and 122 in the first direction may be measured by scanning images of the first and second directional cross-sections of the body 110 with a scanning electron microscope (SEM) of 10,000X magnification. More specifically, the average size of one internal electrode in the first direction may be an average value calculated by measuring the first directional size of one internal electrode at 10 points spaced apart from each other at equal intervals in the second direction in the scanned image. The 10 points spaced apart from each other at equal intervals may be designated in the capacitance formation portion Ac. Additionally, when the average value is measured by extending an average value measurement up to 10 internal electrodes, an average thickness of the internal electrode in the first directional may be further generalized.

Meanwhile, in an example embodiment of the present disclosure, the average thickness td of at least one of the plurality of dielectric layers 111 and the average thickness te of at least one of the plurality of internal electrodes 121 and 122 may satisfy 2×te < td.

In other words, the average thickness td of one dielectric layer 111 may be larger than twice the average thickness te of one internal electrode 121 or 122. Preferably, the average thickness td of the plurality of dielectric layers 111 may be larger than twice the average thickness te of the plurality of internal electrodes 121 and 122.

In general, high-voltage electronic components have a major issue due to reliability issues due to a decrease in breakdown voltage (BDV) in a high-voltage environment.

Accordingly, in order to prevent a decrease in the breakdown voltage under a high voltage environment, the average thickness td of the dielectric layer 111 may be made larger than twice the average thickness te of the internal electrodes 121 and 122, so that the thickness of the dielectric layer, which is a distance between internal electrodes, may be increased, thereby improving the breakdown voltage (BDV) characteristics.

When the average thickness td of the dielectric layer 111 is less than or equal to twice the average thickness te of the internal electrodes 121 and 122, an average thickness of the dielectric layer, which is a distance between the internal electrodes, may be thin, which may reduce the breakdown voltage, and a short circuit may occur between the internal electrodes.

Meanwhile, the body 110 may include cover portions 112 and 113 disposed on both end-surfaces of the capacitance formation portion Ac in the first direction.

Specifically, the body 110 may include a first cover portion 112 disposed on one surface of the capacitance formation portion Ac in the first direction, and a second cover portion 113 disposed on the other surface of the capacitance formation portion Ac in the first direction, and more specifically, the body 110 may include an upper cover portion 112 disposed above the capacitance formation portion Ac in the first direction, and a lower cover portion 113 disposed below the capacitance formation portion Ac in the first direction.

The upper cover portion 112 and the lower cover portion 113 may be formed by stacking a single dielectric layer 111 or two or more dielectric layers 111 on upper and lower surfaces of the capacitance formation portion Ac in the first direction, respectively, and may basically serve to prevent damage to the internal electrodes 121 and 122 due to physical or chemical stress.

The upper cover portion 112 and the lower cover portion 113 do not include the internal electrodes 121 and 122, and may include the same material as the dielectric layer 111. That is, the upper cover portion 112 and the lower cover portion 113 may include a ceramic material, and may include, for example, a barium titanate (BaTiO₃)-based ceramic material.

Meanwhile, the thickness tc of the cover portions 112 and 113 is not limited.

However, in order to more easily achieve miniaturization and high capacitance of the multilayer electronic component, the thickness tc of the cover portions 112 and 113 may be 100 um or less, preferably 30 um or less, and more preferably 20 um or less in ultra-small products.

Here, the thickness tc of the cover portions 112 and 113 may refer to a first directional size of the cover portions 112 and 113 in the first direction. Additionally, the thickness tc of the cover portions 112 and 113 may refer to the average thickness tc of the cover portions 112 and 113, and may refer to an average size of the cover portions 112 and 113 in the first direction.

The average size of the cover portions 112 and 113 in the first direction may be measured by scanning images of the first and second directional cross-sections of the body 110 with a scanning electron microscope (SEM) of 10,000X magnification. More specifically, the average size thereof may refer to an average value calculated by measuring the first directional size at 10 points equally spaced from each other in the second direction in the image obtained by scanning one cover portion.

Additionally, the average size of the cover portion in the first direction measured by the above-described method may have substantially the same size as the average size of the cover portion in the first direction in the first and third directional cross-sections of the body 110.

Meanwhile, the multilayer electronic component 100 may include side margin portions 114 and 115 disposed on both third directional end-surfaces of the body 110.

More specifically, the side margin portions 114 and 115 may include a first side margin portion 114 disposed on the fifth surface 5 of the body 110 and a second side margin portion 115 disposed on the sixth surface 6 of the body 110.

As illustrated, the side margin portions 114 and 115 may refer to a region between the end-surfaces of the first and second internal electrodes 121 and 122 in the third direction and a boundary surface of the body 110, based on the first and third directional cross-sections of the body 110.

The side margin portions 114 and 115 may be formed by applying a conductive paste to form the internal electrodes 121 and 122 except where the side margin portions 114 and 115 are to be formed on the ceramic green sheet applied to the capacitance formation portion Ac, and cutting the stacked internal electrodes 121 and 122 so that the internal electrodes 121 and 122 are exposed to the fifth and sixth surfaces 5 and 6 of the body 110 in order to suppress a step portion caused by the internal electrodes 121 and 122, and then stacking a single dielectric layer 111 or two or more dielectric layers 111 on both third directional end-surfaces of the capacitance formation portion Ac in the third direction.

The side margin portions 114 and 115 may serve to prevent damage to the internal electrodes 121 and 122 due to physical or chemical stress.

The first side margin portion 114 and the second side margin portion 115 do not include the internal electrodes 121 and 122 and may include the same material as the dielectric layer 111. That is, the first side margin portion 114 and the second side margin portion 115 may include a ceramic material, and may include, for example, a barium titanate (BaTiO₃) based ceramic material.

Meanwhile, a width wm of the first and second side margin portions 114 and 115 is not limited.

However, in order to more easily achieve miniaturization and high capacitance of the multilayer electronic component 100, the width wm of the side margin portions 114 and 115 may be 100 um or less, preferably 30 um or less, and more preferably 20 um or less in ultra-small products.

Here, the width wm of the side margin portions 114 and 115 may refer to a third directional size of the side margin portions 114 and 115. Additionally, the width wm of the side margin portions 114 and 115 may refer to the average width wm of the side margin portions 114 and 115, and may refer to an average size of the side margin portions 114 and 115 in the third direction.

The average size of the side margin portions 114 and 115 in the third direction may be measured by scanning images of the first and third directional cross-sections of the body 110 with a scanning electron microscope (SEM) of 10,000X magnification. More specifically, the average size thereof may refer to an average value calculated by measuring the third directional size at 10 points equally spaced apart from each other in the first direction in an image obtained by scanning one side margin portion.

In an example embodiment of the present disclosure, a structure in which the ceramic electronic component 100 has two external electrodes 131 and 132 is described, but the number or shape of the external electrodes 131 and 132 may be changed depending on the shape of the internal electrodes 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Additionally, the external electrodes 131 and 132 may be disposed to extend to a portion of the first and second surfaces 1 and 2 of the body 110, and may also be disposed to extend to a portion of the fifth and sixth surfaces 5 and 6 of the body 110. That is, the first external electrode 131 may be disposed on a portion of the first, second, fifth, and sixth surfaces 1, 2, 5 and 6 of the body 110 and disposed on the third surface 3 of the body 110, and the second external electrode 132 may disposed on a portion of the first, second, fifth and sixth surfaces 1, 2, 5 and 6 of the body 110 and disposed on the third surface 3 of the body 110.

In an example embodiment of the present disclosure, the external electrodes 131 and 132 may include a conductive metal 10a, a ceramic material 10b, and glass 10c.

A material having excellent electrical conductivity may be used as the conductive metal 10a included in the external electrodes 131 and 132, and for example, the conductive metal 10a may include one or more selected from the group consisting of nickel (Ni), copper (Cu), palladium (Pd), silver (Ag), gold (Au), platinum (Pt), tin (Sn), tungsten (W), titanium (Ti) and alloys thereof, and the present disclosure is not particularly limited thereto.

The ceramic material 10b included in the external electrodes 131 and 132 may include at least one of perovskite (ABO₃)-based ceramic materials, such as barium titanate (BaTiO₃)-based materials, K_{0.5}Na_{0.5}NbO₃, Bi_{0.5}Na_{0.5}TiO₃, and Pb(Zr, Ti)O₃.

More specifically, the ceramic material 10b included in the external electrodes 131 and 132 may include at least one of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), K_{0.5}Na_{0.5}NbO₃, Bi_{0.5}Na_{0.5}TiO₃, and Pb(Zr, Ti)O₃.

However, the present disclosure is not particularly limited thereto, and in the perovskite (ABO₃) structure including the above-mentioned ceramic material, A-site or B-site may include a ceramic material in which at least one of lithium (Li), barium (Ba), calcium (Ca), aluminum (Al), copper (Cu), zirconium (Zr) and titanium (Ti) is substituted or dissolved.

The ceramic material 10b included in the external electrodes 131 and 132 may play a role in a sintering progress of a paste for external electrodes during the process of forming the external electrode during the sintering process.

When sintering of the paste for external electrodes progresses significantly quickly, the densification of the external electrode may decrease, or the external electrode may be lifted off the body or delaminated.

In general, the ceramic material 10b has a higher melting point than the conductive metal 10a or glass 10c, so that the paste for external electrodes includes the ceramic material 10b, the sintering progress rate of the external electrode may be reduced.

In the present disclosure, as an example of a more specific method of measuring the content of elements included in each component of the multilayer electronic component 100, in the case of destruction method, components may be analyzed using an Energy Dispersive X-ray Spectroscopy (EDS) mode of the scanning electron microscopy (SEM, an EDS mode of a transmission electron microscope (TEM), or an EDS mode of a scanning transmission electron microscope (STEM). First, a thinly sliced analysis sample is prepared using a focused ion beam (FIB) device in a region to be observed among the sintered multilayer electronic component 100. Then, a damaged layer on a surface of the thinly sliced analysis sample is removed using xenon (Xe) or argon (Ar) ion milling, and then, qualitative/quantitative analysis is performed by mapping each component to be measured in an image obtained using SEM-EDS, TEM-EDS, or STEM-EDS. In this case, the qualitative/quantitative analysis graph of each component may be expressed in terms of mass percentage (wt%), atomic percentage (at%), or mole percentage (mol%) of each element. In this case, the qualitative/quantitative analysis graph thereof may be expressed by converting the number of moles of another specific component to the number of moles of a specific component.

Through another method, a chip may be crushed and a region to be measured may be selected, and in a region including the selected dielectric microstructure, the components of the corresponding region may be analyzed using devices such as inductively coupled plasma spectroscopy (ICP-OES) and inductively coupled plasma mass spectrometry (ICP-MS).

In a multilayer electronic component 100 according to an example embodiment of the present disclosure, the external electrodes 131 and 132 may include 3 wt% or more and 20 wt% or less of the ceramic material 10b.

The external electrodes 131 and 132 may include ceramic material 10b in an amount of 3 wt% or more and 20 wt% or less, thereby improving the densification of the external electrodes 131 and 132, and suppressing an increase in contact resistance between the internal electrodes 121 and 122 and the external electrodes 131 and 132.

When the external electrodes 131 and 132 include less than 3 wt% of the ceramic material 10b, because a sintering delay effect of the external electrode is minimal, lifting or delamination of the external electrode may occur, and when the external electrodes 131 and 132 include more than 20 wt% of the ceramic material 10b, this may interfere with the contact between the internal electrodes 121 and 122 and the external electrodes 131 and 132, resulting in problems such as deteriorating electrical connectivity or increasing equivalent series resistance (ESR).

The glass 10c included in the external electrodes 131 and 132 may include silicon (Si), boron (B), sodium (Na), and aluminum (Al), and the composition of the glass 10c may include SiO₂, B₂O₃, Na₂O, and Al₂O. For example, the glass 10c may include borosilicate glass, a type of low melting point glass.

However, the present disclosure is not particularly limited thereto, and the glass 10c may further include at least one of copper (Cu), bismuth (Bi), zinc (Zn), zirconium (Zr), lithium (Li), titanium (Ti), calcium (Ca), and lead (Pb), and the composition of the glass 10c may further include at least one of CuO, Bi₂O₃, ZnO, ZrO, Li₂O, TiO₂, CaCO₃, NaHCO₃, and PbO.

The glass 10c included in the external electrodes 131 and 132 may serve to lower a sintering temperature of the paste for external electrodes during a process of forming the external electrodes during the sintering process.

As the glass 10c induces low-temperature sintering of the external electrodes 131 and 132, deterioration of electrical characteristics may be suppressed by preventing a pooling phenomenon in which glass is eluted from surfaces of the external electrodes 131 and 132, and as a heat treatment temperature of the external electrodes 131 and 132 may be lowered, re-sintering of the body 110 may be prevented, thereby preventing the problem of deteriorating the characteristics of the multilayer electronic component.

Specifically, as the low melting point glass is included, the reliability of the multilayer electronic component 100 may be improved by increasing corrosion resistance to a plating solution.

The content of the glass 10c included in the external electrodes 131 and 132 is not particularly limited, but may be less than the content of the ceramic material 10b included in the external electrodes 131 and 132.

In other words, when the content (wt%) of the ceramic material 10b included in the external electrodes 131 and 132 is referred to as CE, and the content (wt%) of glass 10c included in the external electrodes 131 and 132 is referred to as GL, the external electrodes 131 and 132 may satisfy GL < CE, and the paste for external electrodes for forming the external electrodes may satisfy GL < CE.

As the external electrodes 131 and 132 satisfy GL < CE, low-temperature sintering of the external electrodes 131 and 132 may proceed smoothly, and a heat treatment increase due to the ceramic material 10b may be suppressed to prevent the body from being re-sintered.

When the content (GL) of the glass 10c included in the external electrodes 131 and 132 is greater than the content (CE) of the ceramic material 10b (CE < GL), due to the addition of excessive glass 10c, the sintering of the external electrodes 131 and 132 may not proceed sufficiently, or the glass may be dissolved onto the surfaces of the external electrodes 131 and 132.

In this case, the content (CE) of the glass 10c included in the external electrodes 131 and 132 may be 0.1 to 0.2 times the content (GL) of the ceramic material 10b included in the external electrodes 131 and 132. In other words, the content (CE) may satisfy 0.1×CE ≤ GL ≤ 0.2×CE.

As the external electrodes 131 and 132 satisfy 0.1×CE ≤ GL ≤ 0.2×CE, low-temperature sintering of the external electrodes 131 and 132 may proceed smoothly, and the heat treatment increase due to the ceramic material 10b may be suppressed to prevent the body from being re-sintered.

When the external electrodes 131 and 132 satisfy GL < 0.1×CE, because the sintering temperature is not sufficiently lowered, the body may be re-sintered due to increased heat treatment due to the ceramic material 10b, and when the external electrodes 131 and 132 satisfy 0.2×CE < GL, due to the addition of excessive glass 10c, the sintering of the external electrodes 131 and 132 may not proceed sufficiently, or the glass may be eluted onto the surfaces of the external electrodes 131 and 132.

Additionally, the content (CE) of the glass 10c included in the external electrodes 131 and 132 may be greater than 0 times and less than or equal to 0.2 times the content of the conductive metal 10a included in the external electrodes 131 and 132.

The content (CE) of the glass 10c included in the external electrodes 131 and 132 satisfies more than 0 times and less than or equal to 0.2 times the content of the conductive metal 10a included in the external electrodes 131 and 132, the low-temperature sintering of the external electrodes 131 and 132 may proceed smoothly, and the electrical connectivity between the external electrodes 131 and 132 and the internal electrodes 121 and 122 may not be degraded, and deterioration of the internal electrodes 121 and 122 may be prevented.

When the content (CE) of the glass 10c included in the external electrodes 131 and 132 is more than 0.2 times the content of the conductive metal 10a included in the external electrodes 131 and 132, the sintering of the external electrodes 131 and 132 may not proceed sufficiently due to the addition of excessive glass 10c, and the electrical connectivity between the external electrodes 131 and 132 and the internal electrodes 121 and 122 may be deteriorated, or glass may be eluted onto the surfaces of the external electrodes 131 and 132.

The description of the external electrodes 131 and 132 described above may be a description of the sintering electrodes described below, and when the external electrodes 131 and 132 have, for example, a multilayer structure, the description thereof may be a description of the electrode layer, and more specifically, the description thereof may be a description of a first electrode layer.

As described above, the external electrodes 131 and 132 may be formed using any material as long as the material has electrical conductivity, such as a metal, and the specific material may be determined in consideration of electrical characteristics, structural stability, and the like, and furthermore, the external electrodes 131 and 132 may have a multilayer structure.

For example, the external electrodes 131 and 132 may include an electrode layer disposed on the body 110 and a plating layer disposed on the electrode layer.

For a more specific example of the electrode layer, the electrode layer may include a first electrode layer, which is a sintering electrode including a first conductive metal and glass, or may include a second electrode layer, which is a resin-based electrode including a second conductive metal and a resin.

Here, the conductive metal included in the first electrode layers 131a and 132a may be referred to as a first conductive metal, and the conductive metal included in the second electrode layers 131b and 132b may be referred to as a second conductive metal. In this case, the first conductive metal and the second conductive metal may be identical to or different from each other, and when a plurality of conductive metals are included, only some of the same conductive metals may be included, but the present disclosure is not particularly limited thereto.

Additionally, the electrode layers 131a, 132a, 131b and 132b may be formed by sequentially forming a sintering electrode and a resin-based electrode on a body.

Additionally, the electrode layers 131a, 132a, 131b and 132b may be formed by transferring a sheet including a conductive metal onto the body, or may be formed by transferring a sheet including conductive metal onto a sintering electrode.

A material having excellent electrical conductivity may be used as the conductive metal included in the electrode layers 131a, 132a, 131b and 132b, and for example, the conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof, but the present disclosure is not particularly limited thereto.

In an example embodiment of the present disclosure, the electrode layers 131a, 132a, 131b and 132b may have a two-layered structure including first electrode layers 131a and 132a and second electrode layers 131b and 132b, and thus, the external electrodes 131 and 132 may include first electrode layers 131a and 132a including a conductive metal and glass, and second electrode layers 131b and 132b disposed on the first electrode layers 131a and 132a and including the conductive metal and a resin.

The first electrode layers 131a and 132a may serve to improve adhesion to the body 110 by including glass, and the second electrode layers 131b and 132b may serve to improve bending strength by including the resin.

The first conductive metal included in the first electrode layers 131a and 132a is not particularly limited as long as a material of the first conductive metal may be electrically connected to the internal electrodes 121 and 122 to form an electric capacity, and may include, for example, one or more selected from the group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to first conductive metal particles and then sintering the conductive paste.

The second conductive metal included in the second electrode layers 131b and 132b may serve to electrically connect to the first electrode layers 131a and 132a.

The conductive metal included in the second electrode layers 131b and 132b is not particularly limited as long as a material of the conductive metal may be electrically connected to the first electrode layers 131a and 132a, and may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles and flake-shaped particles. That is, the conductive metal may consist only of flake-shaped particles or only spherical particles, and may be a mixture of flake-shaped and spherical particles. Here, the spherical particle may also include a shape that is not completely spherical, for example, a shape in which the length ratio of a major axis and a minor axis (major axis/minor axis) is 1.45 or less. The flake-shaped particles refer to particles with a flat and elongated shape, and although the present disclosure is not particularly limited, the flake-shaped particles may have, for example, a length ratio (major axis/minor axis) of more than or equal to 1.95. The lengths of the major axis and the minor axis of the spherical particles and flake-shaped particles may be measured from an image obtained by scanning first and second directional cross-sections cut from the center of the multilayer electronic component in the third direction with the scanning electron microscope (SEM).

The resin included in the second electrode layers 131b and 132b may ensure bonding properties and serve as a shock absorber. The resin included in the second electrode layers 131b and 132b is not particularly limited as long as the resin has bonding properties and shock absorption properties and may be mixed with second conductive metal particles to make a paste, and may include, for example, an epoxy-based resin.

Additionally, the second electrode layers 131b and 132b may include a plurality of metal particles, an intermetallic compound, and a resin. By including the intermetallic compound, electrical connectivity with the first electrode layers 131a and 132a may be further improved. The intermetallic compound may serve to improve electrical connectivity by connecting a plurality of metal particles, and may serve to surround a plurality of metal particles and connect the metal particles to each other.

In this case, the intermetallic compound may include a metal having a melting point lower than a curing temperature of the resin. That is, because the intermetallic compound includes the metal having the melting point lower than the curing temperature of the resin, a metal having the melting point lower than the curing temperature of the resin are melted during a drying and curing process and forms the intermetallic compound with a portion of the metal particles, thereby surrounding the metal particles. In this case, the intermetallic compound may preferably include a low melting point metal of 300 °C or lower.

For example, the intermetallic compound may include Sn, which has a melting point of 213 to 220 °C. During the drying and curing process, Sn is melted, and the melted Sn wets high melting point metal particles such as Ag, Ni or Cu through capillary action, and reacts with some of the Ag, Ni, or Cu metal particles to form intermetallic compounds such as Ag₃Sn, Ni₃Sn₄, Cu₆Sn₅ and Cu₃Sn. Ag, Ni or Cu that did not participate in the reaction remain in the form of metal particles.

Accordingly, the plurality of metal particles may include one or more of Ag, Ni, and Cu, and the intermetallic compound may include one or more of Ag₃Sn, Ni₃Sn₄, Cu₆Sn₅ and Cu₃Sn.

The plating layers 131c and 132c may serve to improve mounting characteristics.

The types of plating layers 131c and 132c are not particularly limited, and may be a single layer of plating layers 131c and 132c including one or more of nickel (Ni), tin (Sn), palladium (Pd), and alloys thereof, or may be formed of a plurality of layers.

For more specific examples of the plating layers 131c and 132c, the plating layers 131c and 132c may be Ni plating layers or Sn plating layers, and may be in the form in which a Ni plating layer and a Sn plating layer are sequentially formed on the electrode layer, and may be in the form in which the Sn plating layer, the Ni plating layer, and the Sn plating layer are formed sequentially. Additionally, the plating layers 131c and 132c may include a plurality of Ni plating layers and/or a plurality of Sn plating layers.

The size of the multilayer electronic component 100 is not limited.

However, in order to achieve both miniaturization and high capacitance, the thickness of the dielectric layer and internal electrode must be thinned to increase the number of stacks, and thus, the effect according to the present disclosure may be more noticeable in the multilayer electronic component 100 having a size of 3216 (length × width: 3.2 mm × 1.6 mm) or less.

Here, the multilayer electronic component 100 a size of 3216 or less may denote that an average length (average size in the second direction) of the multilayer electronic components is 3.2 mm or less, and an average width (average size in the third direction) may is 1.6 mm or less, but this does not mean exactly satisfying these numerical values, but may be a concept that includes an error of about 10%.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a dielectric layer and an internal electrode; and
an external electrode disposed on the body and comprising a conductive metal, a ceramic material and glass including silicon (Si), boron (B), sodium (Na), and aluminum (Al) .

2. The multilayer electronic component according to claim 1, wherein the glass includes borosilicate glass.

3. The multilayer electronic component according to claim 1, wherein the glass includes at least one of copper (Cu), bismuth (Bi), zinc (Zn), zirconium (Zr), lithium (Li), titanium (Ti), calcium (Ca), and lead (Pb).

4. The multilayer electronic component according to claim 1, wherein the ceramic material includes at least one of BaTiO₃, K_{0.5}Na_{0.5}NbO₃, Bi_{0.5}Na_{0.5}TiO₃, and Pb(Zr, Ti)O₃.

5. The multilayer electronic component according to claim 1, wherein the ceramic material includes at least one of lithium (Li), barium (Ba), calcium (Ca), aluminum (Al), copper (Cu), zirconium (Zr), and titanium (Ti).

6. The multilayer electronic component according to claim 1, wherein when a content (wt%) of a ceramic material included in the external electrode is referred to as CE and a content (wt%) of glass included in the external electrode is referred to as GL, the external electrode satisfies GL < CE.

7. The multilayer electronic component according to claim 6, wherein CE and GL satisfy 0.1×CE ≤ GL ≤ 0.2×CE.

8. The multilayer electronic component according to claim 1, wherein the conductive metal includes at least one of copper (Cu), nickel (Ni), silver (Ag), tin (Sn), and alloys thereof.

9. The multilayer electronic component according to claim 1, wherein the glass includes SiO₂, B₂O₃, Na₂O, and Al₂O.

10. The multilayer electronic component according to claim 1, wherein the glass includes at least one of CuO, Bi₂O₃, ZnO, ZrO, Li₂O, TiO₂, CaCO₃, NaHCO₃, and PbO.
